# EUROPEAN PATENT APPLICATION

(11) **EP 1 875 797 A2**
(43) Date of publication of application: **09.01.2008**
(21) Application number: 07111984.6
(22) Date of filing: 06.07.2007
(51) Int. Cl.: A01G 9/22

(54) **Greenhouse or glasshouse with screen installation provided with an energy-converting device**

(30) Priority: 06.07.2006 NL 2000131
(71) Applicant: Van Der Valk Systemen B.V., 2681 LP Monster (NL)
(72) Inventor: Kester, Lourentius Leonardus Theodorus Maria, 2675 AA, Honselersdijk (NL)
(74) Representative: van Westenbrugge, Andries

(57) **Abstract**

A greenhouse or glasshouse comprises a framework composed of columns (1), a cover (23) supported by the columns (1) as well as a screen installation, which screen installation (27) comprises at least one fixed stop (24), a screen profiled section (8) and a screen cloth (7), which screen cloth (7) extends between the fixed stop (24) and the screen profiled section (8), which screen profiled section (8) can essentially be displaced transversely to its longitudinal direction between an open position, in which the screen cloth (7) is folded up to form a package and the screening effect of the screen cloth (7) is essentially cancelled, and a closed position in which the screen cloth (7) extends over a nominal length in order to provide a screening effect, which screen installation (27) is provided with a converting device (21) for converting light into energy, such as electricity and/or heat. The converting device (21) for converting light into energy is attached to the stop (24).

## Description

The invention relates to a greenhouse or glasshouse, comprising a framework composed of columns, a cover supported by the columns as well as a screen installation, which screen installation comprises at least one fixed stop, a screen profiled section and a screen cloth, between which fixed stop and screen profiled section the screen cloth extends, which screen profiled section can essentially be displaced transversely to its longitudinal direction between an open position, in which the screen cloth is folded up to form a package and the screening effect of the screen cloth is essentially cancelled, and a closed position in which the screen cloth extends over a nominal length in order to provide a screening effect, which screen installation is provided with a converting device for converting light into energy, such as electricity and/or heat.

A greenhouse or glasshouse of this type is described in Dutch patent application 1.028.000 which was filed earlier. With this greenhouse, the converting device is situated on the screen profiled section, in such a manner that effective use can be made of the (incidentally small) shadow effect of the screen profiled section. The converting device itself therefore does not contribute to the shadow effect.

The converting device can be used with various kinds of greenhouses or glasshouses. By way of example, mention may be made of the so-called Venlo greenhouses, wide-span greenhouses, film-covered greenhouses and the like. It is customary to use screen installations in such greenhouses, for example in order to keep out or dim the sunshine, in order to achieve heat-insulation or in order to prevent light emission. The screen installation and in particular the screen profiled section and the fixed stop form an obstruction for the incident light, which obstruction is in fact undesirable during normal operation. This means that the screen profiled section and the stop are constantly exposed to incident light, whether this occurs during use of the screen installation in its closed position or when the latter is in its open position. It is known that any obstruction of the incident light is disadvantageous for the yield of the crops grown in the greenhouse. Therefore, continuous efforts are being undertaken to reduce the shadow effect of elements such as screen profiled sections and base sections as much as possible, for example by minimizing the transverse dimensions thereof. However, it is clear that there is a limit to these attempts to reduce the shadow effect which is determined by the requirement that such elements, such as a screen profiled section and base section, still have to be sufficiently strong and stiff to ensure their normal function.

It is an object of the invention to further increase the effective use of the light incident through the cover, in spite of the abovementioned limitations. This object is achieved by the fact that the stop supports a converting device.

The fact that the stop has a fundamentally disadvantageous light-intercepting effect is used in an effective manner by generating electrical energy or thermal energy. The screen profiled sections are situated in a very good position to carry this out, i.e. directly in the path of the incident light. Despite the fact that the light-intercepting effect is kept as limited as possible by minimizing the transverse dimensions of the stop, a sufficiently large surface area nevertheless remains to accommodate the converting device. The latter is preferably situated on top of the stop, so that an uninterrupted incidence of light is always ensured. The converting device is therefore designed to be stationary, which offers advantages regarding the connection of the converting device to energy buyers.

Preferably, the stop is designed in the form of a base section, with the converting device being arranged on said base section. In one particular embodiment, the converting device may be situated on a support which projects on at least one side of the base section in the direction of the associated screen profiled section. This embodiment offers the advantage that the converting device can not only extend on top of the base section, but also on top of the screen which is folded up to form a package in the open position. After all, the folded-up package also has an inevitable shadow effect, which shadow effect can then still be used in an effective way by also positioning the converting device on top of this folded-up package. This can be achieved in particular by selecting the distance over which the support projects with respect to the base section to be approximately equal to the width or thickness of the package.

Greenhouses and glasshouses as described above have to meet increasingly stringent requirements with respect to the environment and the surroundings. Thus, it is to be expected that the light emission will eventually have to be completely eradicated. Certain crops require artificial lighting. However, in particular at night-time any emission of light has to be prevented completely.

However, such a complete blackout means that the material used for the screen cloth has to be completely impermeable, which may disturb the heat balance in the greenhouse. When opening the ventilation windows, the space beneath the screen cloth can no longer be sufficiently aerated. Under such circumstances, it is not possible to obtain optimum results with respect to the cultivation of crops.

It is therefore desirable to improve a greenhouse or glasshouse of the type described in the preamble in such a manner that, on the one hand, a complete protection against light or blackout is possible, while, on the other hand, the other functions, in particular the ventilation of the greenhouse, can continue in the usual way. In this connection, the screen installation may be situated on the top of the cover.

With the greenhouse or glasshouse according to the invention, it is also possible to use the sunlight which impinges on the converting device in an optimum manner. In this case, no part of the structure of the greenhouse or the glasshouse blocks the sunlight, as the solar cells or collectors are situated entirely on top of and outside this structure. On the other hand, this does not result in any additional shadow effect on top of that provided by the screen installation itself in the folded-up position of the screen cloth. The ventilation of the greenhouse can be carried out in the usual manner under the closed screen cloth and without any light emission occurring.

The screen installation can be supported in various ways; in particular the screen installation may comprise at least one base section which is securely supported on the cover, in the direction of which base section the screen cloth can be folded up to form a package, which base section extends parallel to the screen profiled section. In certain embodiments of the greenhouse, the cover comprises a series of gabled roofs, each of which comprises a ridge and gutters on either side of the ridge. The base section and the screen profiled section may run transversely to the ridge and gutters.

In order to support the screen profiled section, support means may be provided for movably supporting the screen profiled section. These support means may comprise carriers which run beneath the screen profiled section and extend next to one another.

With such an embodiment of the greenhouse, the base section can be supported in various ways. According to a first possibility, the base section may be supported on the ridges. This offers the advantage that the cover of the greenhouse remains accessible for washing installations for covers, which are usually supported in the region which is delimited by a gutter and the glass panels which project upwards from said gutter. This support may be designed to have supports which diverge downwards between the base section and the gutter. According to another option, the base section may be supported on the gutters.

A further advantage is the fact that the screen, pushed together to form a package, is well protected against weather conditions. As the screen is installed on the outside of the greenhouse and is thus exposed to rain and wind, the quality thereof may deteriorate relatively quickly. The protection which is provided by the support may in this connection be used effectively to protect the screen cloth and increase its effective service life.

In addition, the converting device may be situated on the screen profiled section. In this case, the converting device may also be situated on a support which projects on at least one side of the screen profiled section in the direction of the associated base section. Preferably, the sum total of the distance over which the support projects with respect to the screen profiled section, and the distance over which the other support projects with respect to the base section, is then approximately equal to the width or thickness of the package.

According to a first possibility, the converting device may comprise solar cells for converting sunlight into electricity. According to another possibility, the converting device may comprise solar collectors for converting sunlight into heat.

Support wires which extend transversely to the screen profiled section and the base section may be provided beneath the screen cloth in the usual manner, and retaining wires above the screen cloth which extend transversely to the screen profiled section and the base section. The screen cloth can thus be held securely and in a well-protected manner, even during strong winds. In addition, the screen installation may allow sufficiently great movements of air on the bottom side which are required in order to ventilate the greenhouse. However, a suspended version is also possible, which only has an upper wire from which the screen cloth hangs.

The invention will be described in more detail below with reference to an exemplary embodiment illustrated in the figures, in which:
Figure 1 shows a partial perspective view of a greenhouse according to the invention.
Figure 2 shows an enlarged detail of the view from Figure 1.
Figure 3 shows the cross section along III-III from Figure 2.

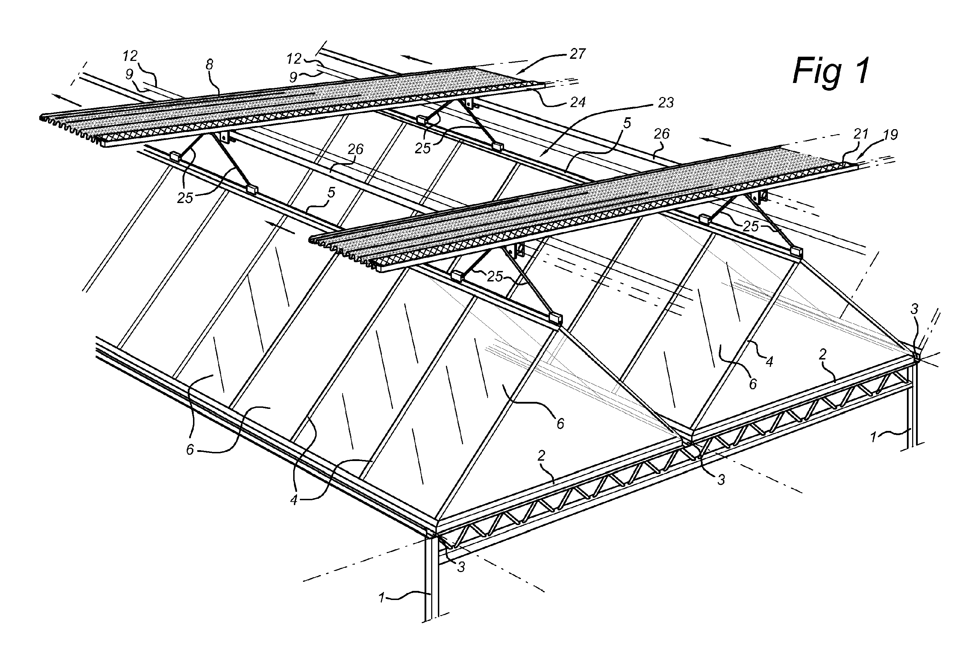

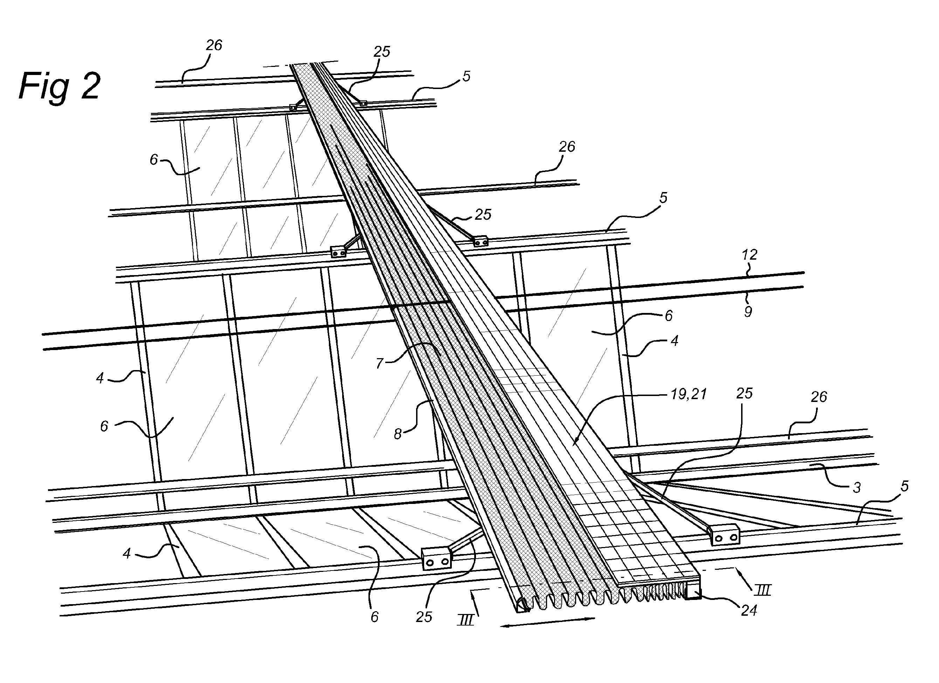

The greenhouse according to the invention illustrated in Figures 1 and 2 comprises a number of columns 1 which support parallel beams 2. Gutters 3 extend across these beams 2. From the gutters 3, the bars 4 extend obliquely upwards to the ridges 5. Transparent panels are arranged between the gutters 3, bars 4 and ridges 5.

In the exemplary embodiment shown, the greenhouse cover 23, comprising the gutters 3, bars 4, ridges 5 and panels 6, is partly covered by a screen cloth 7, which is attached to the base section 24 at one end. This base section is supported on the ridges 5 by means of the downwardly diverging struts 25. Support wires 9 are attached to the base sections 24 for movably supporting the screen cloth 7 and the screen profiled section 8. Retaining wires 12 are provided above the screen cloth 7 and the screen profiled section 8 which are attached to the base sections 24. By means of these retaining wires 12, the screen cloth can be prevented from being blown upwards.

Furthermore, the drive rods 26 are also movably supported in their longitudinal direction by means of these base sections 24, by means of which drive rods 26 the screen profiled sections 8 can be moved to and fro. The screen profiled section 8 is to this end connected to the drive rod 26 by means of slip couplings 28. However, the drive element may also be formed by a cable.

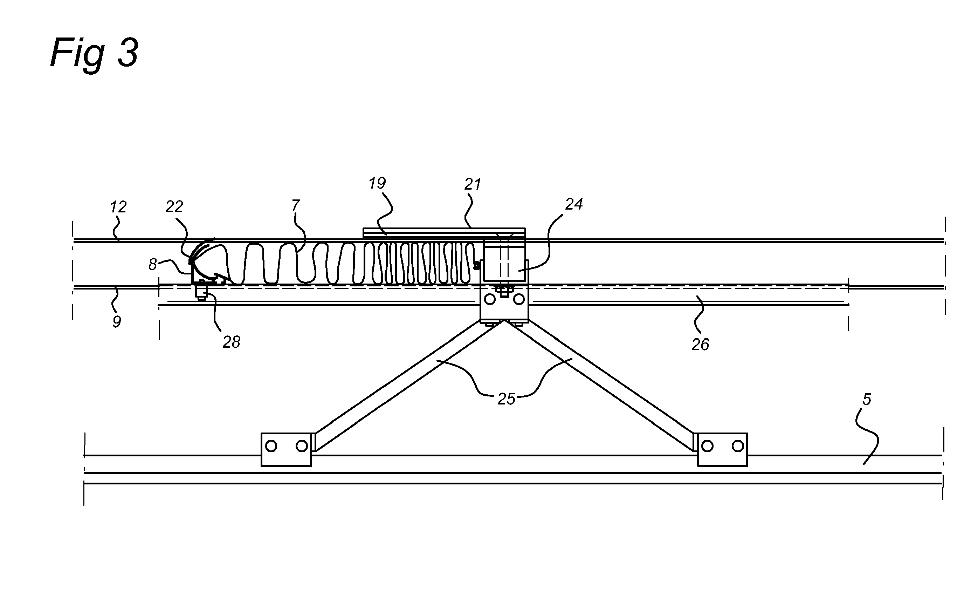

The cross section of Figure 3 shows that a support 19 is mounted on the base section 24 and projects in the direction of the screen profiled section 8. The width of this support 19 is chosen such that the package composed of pushed-together screen cloth 7 fits beneath it. A series of solar cells 21 is installed on the support. However, it is also possible to install a heat-exchanger filled with liquid on the support 19 in order to generate thermal energy.

Although the figures show an embodiment in which the base section 24 forms part of a screen installation arranged on top of the greenhouse cover, the invention is not limited thereto. The invention can also be used with a screen installation which is provided in the greenhouse or glasshouse in the usual way, below the cover. Even with such a screen installation, the base section can serve as support for a converting device.

## Claims

**1.** Greenhouse or glasshouse, comprising a framework composed of columns (1), a cover (23) supported by the columns (1) as well as a screen installation (27), which screen installation (27) comprises at least one fixed stop (24), a screen profiled section (8) and a screen cloth (7), which screen cloth (7) extends between the fixed stop (24) and the screen profiled section (8), which screen profiled section (8) can essentially be displaced transversely to its longitudinal direction between an open position, in which the screen cloth (7) is folded up to form a package and the screening effect of the screen cloth (7) is essentially cancelled, and a closed position in which the screen cloth (7) extends over a nominal length in order to provide a screening effect, which screen installation (27) is provided with a converting device (21) for converting light into energy, such as electricity and/or heat, **characterized in that** the converting device (21) for converting light into energy is attached to the stop (24).

**2.** Greenhouse according to Claim 1, in which the stop comprises a base section (24), and the converting device (21) is arranged on the base section (24).

**3.** Greenhouse according to Claim 2, in which the converting device (21) is situated on a support (19) which projects on at least one side of the base section (24) in the direction of the associated screen profiled section (8).

**4.** Greenhouse according to Claim 3, in which the distance over which the support (19) projects with respect to the base section (24) is approximately equal to the thickness of the package.

**5.** Greenhouse according to one of the preceding claims, in which the screen installation (27) is situated on the top of the cover (23).

**6.** Greenhouse according to Claim 5, in which the cover (23) comprises a series of gabled roofs, each of which comprises a ridge (5) and gutters (3) on either side of the ridge (5), and the screen profiled section (8) runs transversely to the ridge (5) and gutters (3).

**7.** Greenhouse according to Claim 5 or 6, in which the screen installation (27) comprises support means (25, 26) for supporting the screen installation (27) on the cover (23).

**9.** Greenhouse according to one of Claims 7 or 8, in which the support means (25, 26) are attached to the ridges (5).

**10.** Greenhouse according to Claim 9, in which two downwardly diverging supports (25) extend between the base section (24) and carriers (26), on the one side, and each ridge (5) on the other side.

**11.** Greenhouse according to Claim 9 or 10, in which the base section (24) is supported on the ridges.

**12.** Greenhouse according to one of the preceding claims, in which the screen cloth (7) is attached to the base section (24).

**13.** Greenhouse according to one of the preceding claims, in which the converting device comprises solar cells (21) for converting sunlight into electricity.

**14.** Greenhouse according to Claim 13, in which the solar cells (21) are in the form of film.

**15.** Greenhouse according to one of Claims 1- 12, in which the converting device comprises solar collectors for converting sunlight into heat.

**16.** Greenhouse according to one of the preceding claims, in which a closing strip (22) is situated on the side facing away from the screen cloth of the screen profiled section (8).

**17.** Greenhouse according to one of the preceding claims, in which support wires (9) which extend transversely to the screen profiled section (8) are provided beneath the screen cloth (7).

**18.** Greenhouse according to one of the preceding claims, in which retaining wires (12) are provided above the screen cloth (7) which extend transversely to the screen profiled section (8).

**19.** Greenhouse according to one of the preceding claims, in which the screen profiled section (8) is connected to a drive element (9) by means of a slip coupling (28).

**20.** Greenhouse according to one of the preceding claims, in which at least one second screen cloth with a second screen profiled section is provided, which second screen cloth is connected, on its edge which faces away from the second screen profiled section, to the first screen profiled section.

**21.** Greenhouse according to Claim 20, in which the second screen profiled section is provided with a further converting device.
